(19) **Europäisches Patentamt / European Patent Office / Office européen des brevets**

(11) **EP 1 273 140 B1**

(12) **EUROPEAN PATENT SPECIFICATION**

(45) Date of publication and mention
of the grant of the patent:
**16.01.2008 Bulletin 2008/03**

(21) Application number: **01917224.6**

(22) Date of filing: **26.03.2001**

(51) Int Cl.:
**H04L 12/56** (2006.01)

(86) International application number:
**PCT/GB2001/001337**

(87) International publication number:
**WO 2001/079992 (25.10.2001 Gazette 2001/43)**

(54) **METHOD AND SYSTEM FOR SCHEDULING INFORMATION USING CALENDARS**

VERFAHREN UND EINRICHTUNG ZUR STEUERUNG VON INFORMATIONEN UNTER VERWENDUNG VON KALENDERN

PROCEDE ET SYSTEME PERMETTANT DE PROGRAMMER LES SORTIES D'UN PROCESSEUR DE RESEAU A L'AIDE DE FILES D'ATTENTE DE DECONNEXION/RECONNEXION DE FLUX

(84) Designated Contracting States:
**AT BE CH CY DE DK ES FI FR GB GR IE IT LI LU MC NL PT SE TR**

(30) Priority: **13.04.2000 US 548913**
**13.04.2000 US 548912**
**13.04.2000 US 548910**

(43) Date of publication of application:
**08.01.2003 Bulletin 2003/02**

(73) Proprietor: **International Business Machines Corporation**
**Armonk, NY 10504 (US)**

(72) Inventors:
• **BASS, Brian, Mitchell**
**Apex, NC 27502 (US)**
• **CALVIGNAC, Jean, Louis**
**Cary, NC 27511 (US)**
• **HEDDES, Marco**
**Hursley Park, Winchester, Hampshire (GB)**
• **SIEGEL, Michael, Steven**
**Raleigh, NC 27615 (US)**
• **VERPLANKEN, Fabrice, Jean**
**F-06610 La Gaude (FR)**

(74) Representative: **Burt, Roger James**
**IBM United Kingdom Limited,**
**Intellectual Property Law, MP 110,**
**Hursley Park,**
**Hursley**
**Winchester, Hampshire SO21 2JN (GB)**

(56) References cited:
**EP-A- 0 944 208** **EP-A2- 0 977 402**
**US-A- 5 926 459**

**Description**

**Background of the Invention**

**Field of the Invention**

The present invention relates to communication network apparatus such as is used to link together information handling systems or computers of various types and capabilities and to components and methods for data processing in such an apparatus. The present invention includes an improved system and method for scheduling the distribution of information units from a flow control system coupled to a plurality of network processing units toward a data transmission network through a MAC. More particularly, the present invention involves scheduling capable of handling a plurality of users who are processing variable size information packets or frames, providing an order to the frames being provided from the flow control system toward the data transmission network while allowing for a plurality of different priorities to be accorded to the different users.

**Background Art**

The description of the present invention which follows is based on a presupposition that the reader has a basic knowledge of network data communications and the routers and switches which are useful in such network communications. In particular, this description presupposes familiarity with the International Standards Organization ("ISO") model of network architecture which divides network operation into layers. A typical architecture based on the ISO model extends from a Layer 1 (which is sometimes referred to a "L1") being the physical pathway or media through which signals are passed upward through Layers 2 (or "L2"), 3 (or "L3"), and so forth to Layer 7 which is the layer of application programming resident in a computer system linked to the network. Throughout this document, references to such layers as L1, L2, L3 are intended to refer to the corresponding layer of the network architecture. The present description also is based on a fundamental understanding of bit strings used in network communication known as packets and frames.

Bandwidth considerations (or the amount of data which a system can handle in a unit of time) are becoming important in today's view of network operations. Traffic over networks is increasing, both in sheer volume and in the diversity of the traffic. At one time, some networks were used primarily for a certain type of communications traffic, such as voice on a telephone network and digital data over a data transmission network. Of course, in addition to the voice signals, a telephone network would also carry a limited amount of "data" (such as the calling number and the called number, for routing and billing purposes), but the primary use for some networks had, at one point in time, been substantially homogenous packets.

A substantial increase in traffic has occurred as a result of the increasing popularity of the Internet (a public network of loosely linked computers sometimes referred to as the worldwide web or "www.") and internal analogs of it (sometimes referred to as intranets) found in private data transmission networks. The Internet and intranets involve transmission of large amounts of information between remote locations to satisfy an ever-growing need for remote access to information and emerging applications. The Internet has opened up to a large number of users in geographically dispersed areas an exploding amount of remote information and enabled a variety of new applications, such as e-commerce, which has resulted in a greatly-increased load on networks. Other applications, such as e-mail, file transfer and database access further add load to networks, some of which are already under strain due to high levels of network traffic.

Voice and data traffic are also converging onto networks at the present time. Data is currently transmitted over the Internet (through the Internet Protocol or IP) at no charge, and voice traffic typically follows the path of lowest cost. Technologies such as voice over IP (VoIP) and voice over asynchronous transfer mode or ATM (VoATM) or voice over frame relay (VoFR) are cost-effective alternatives for transmission of voice traffic in today's environment. As these services migrate, the industry will be addressing issues such as the changing cost structure and concerns over the trade off between cost of service and quality of service in the transmission of information between processors.

Aspects of quality of service include the capacity or bandwidth (how much information can be accommodated in a period of time), the response time (how long does it take to process a frame) and how flexible is the processing (does it respond to different protocols and frame configurations, such as different encapsulation or frame header methods). Those using a resource will consider the quality of service as well as the cost of service, with the tradeoffs depending on the situation presented. It is desirable to allow a variety of different priorities or scheduling algorithms to a user, with the user deciding whether he wants (and will pay the charges associated with) a guaranteed bandwidth, best efforts, or a guaranteed bandwidth with best efforts for peak. In addition, it is desirable that a system for allocating bandwidth have a system for enforcing the priorities and bandwidth which has been selected by a user by denying the user capacity in excess of that which the user has selected and paid for.

Some prior art systems handle outgoing information units from a processing system in a variety of ways. One suggestion is to use a round robin scheduler which fairness amongst a set of queues. Another one employs several different levels of priorities and a queue for each. In such a system, you have an absolute priority where the highest priority work is processed first and the lowest priority work may never get serviced. Still another method of scheduling outputs involves a plurality of prioritized lists. It is also known to use a hierarchical packet scheduling system. There are even systems which use several different scheduling methods in determining the order in which information units are to be sent toward a data transmission network, using a combination of different scheduling techniques.

Other systems have used a weighted priority technique implemented in the form of a round robin - which serves all queues, with some queues served more frequently than other queues, based on an algorithm which defines the level of service. Even such a weighted priority system would provide service to a user who continually exceeds the service levels assigned to it, continuing to serve, albeit less often, even as it exceeds the assigned service level and making it difficult for the system to enforce a level of service policy.

Considering the size of a packet or frame in determining which customers to serve adds a measure of fairness to a service system, in that a user who is processing large frames takes up more of the system capacity and therefore should receive service less often than a user with small frames. Some of the prior art systems consider the size of the transmission in allocating resources, while others do not. Some communication systems use a uniform, fixed-size packet, making consideration of packet size unnecessary, but others do not consider the size of the packet in allocating resources.

Other prior art systems are directed to handling information units which are of a common size as in the so-called Asynchronous Transfer Mode (or ATM) system, so that size of the information unit is not considered in determining the priority of the current or a future information unit. An ATM system with a weight-driven scheduler is one of the solutions which is known in the prior art to schedule outputs from an ATM system.

In any such system, it would be desirable to accommodate system constraints like allocating a certain guaranteed bandwidth to a customer regardless of frame size while providing a mechanism to provide the following additional features: accommodating peak inputs which exceed the guaranteed bandwidth while providing protection for large and persistent exceeding of a system parameter and yet efficiently and equitably use the capacity of the network processor to provide outputs to the data transmission network.

It would be desirable to have a system which has maximum flexibility to allow for different types and levels of service as desired. For example, some users want a minimum bandwidth, others might want a minimum bandwidth but allows for bursts, still others may be interested in an economy service which provides for a "best effort" service, either with or without a minimum bandwidth, and any limits on bandwidth or burst size must be enforceable by the scheduling system. It would be desirable if a scheduling system could have any or all of these features in a simple and efficient system which accommodates variable packet length and provides for a weighted fair queueing system of allocating unused bandwidth, but, unfortunately such systems do not exist in the prior art.

It is also desirable that, when a flow queue disconnects and reconnects, that it not achieve a better priority or place in the queue than it would have had if it had not disconnected and reconnected.

Further, in calculating the schedule, it is desirable that a simple and efficient system be implemented to avoid hardware costs associated with a complex calculation for a new place in the schedule for a given flow after it has been serviced.

Thus, the prior art systems for handling data packets for transmission to a network have undesirable disadvantages and limitations which had an effect either on the versatility of the system or the speed with which it could operate.

EP-A-0 997 402 discloses a system and method of moving information units from a network processor toward a data transmission network in a prioritized sequence which accommodates several different levels of service. The present invention includes a method and system for scheduling the egress of processed information units (or frames) from a network processing unit according to stored priorities associated with the various sources of the information units. The priorities in the preferred embodiment include a low latency service, a minimum bandwidth, a weighted fair queueing and a system for preventing a user from continuing to exceed his service levels over an extended period. The present invention includes a plurality of calendars with different service rates to allow a user to select the service rate which he desires. If a customer has chosen a high bandwidth for service, the customer will be included in a calendar which is serviced more often than if the customer has chosen a lower bandwidth.

## Summary of the Invention

The present invention overcomes the disadvantages and limitations of the prior art systems by providing simple, yet effective, ways of handling information units or frames coming out of a processing system and directing frames to output ports for dispatch to an data transmission network. The present invention has particular application to a system in which packets of variable length are being handled from a plurality of users and where a level of service commitment has been made to at least some of the users.

The present invention allows the use of multiple types of service level agreements or commitments made to different users of the system. That is, a minimum guaranteed bandwidth could be provided to one user while other users enjoy shared bandwidth, a peak bandwidth could be permitted for a limited duration of time and maximum burst level service could be provided to a user, all as programmed and without interfering with the service provided to other users.

The present invention has the advantage that it allows the efficient use of bandwidth resource and allows for service level commitments to be fulfilled while allowing any remaining bandwidth to be used efficiently and equitably.

The present invention also has the advantage of enforcing resource allocations while accommodating bursts. That is, a user can transmit some amount of traffic at a burst rate which exceeds his defined bandwidth for a limited period of time, but, if the user does so for a prolonged period, that user is prohibited from transmitting in excess of his normal bandwidth until he has compensated for the excessive usage. This is accomplished through a system of "credits" for the flow queue for the respective user which have built up while the user was not using his full bandwidth.

The present invention allows a simple calculation without performing division to support the calculation of a new location in the queue for a serviced flow.

The present invention also has the advantage that, upon disconnection and reconnection, a given flow does not achieve an improved position by virtue of its disconnecting.

The present invention uses a slot distance to adjust for the size of the frame and the queue weight to allow a next position to be quickly and easily calculated.

The present invention also maintains a running score of the use of bursts and calculates and maintains an available "credit" to allow bursts within reason but to enforce the system constraints on usage.

The present system also has the advantage of providing a push down stack in which the latest request for service scheduled for a given time slot or cycle is given priority. This is based on the assumption that the user scheduled later must have a higher priority and any delay in serving that user would be a greater percentage delay than a similar delay in serving a lower priority user. Use of this last-in-first-out (LIFO) system for fulfilling slot requests allows the system to minimize the perceived delay in service as a percentage of the normal intervals between successive service when the system is overloaded, that is, it has more work than can be handled at the scheduled time.

## Brief Description of the Drawings

Having thus set forth some of the limitations and disadvantages of the prior art and some objects and advantages of the present invention, other objects and advantages will be apparent to those skilled in the relevant art in view of the following description of the drawings illustrating the present invention of an improved routing system and method in which:

Fig.1 is a block diagram for an interface device including embedded processor complex, showing a DN Enqueue System and Scheduler useful in practicing the present invention;

Fig. 2 is a block diagram of an embedded processor complex of type shown in Fig. 1, with the DN Enqueue (and its included Scheduler) useful in understanding the present invention;

Fig. 3 illustrates a system for scheduling variable length packets in the scheduler of Fig. 2 according to the preferred embodiment of the present invention;

Fig. 4 illustrates a timer based calendar used in the scheduling system of Fig. 3 according to the preferred embodiment of the present invention;

Fig. 5 illustrates a flow chart of the scheduling operation used in connection with the scheduler of Fig. 3-4;

Fig. 6 illustrates a diagram showing how the epochs of Fig. 4 have different time resolutions;

Fig. 7 illustrates maximum burst specifications as used in the present invention;

Figs. 8-13 are flow charts of various components of the present scheduler, including Figs 8 and 9 directed to calculating the next green time, Figs. 10 and 11 directed to calculating and updating burst size credits and Figs. 12 and 13 illustrating aging of queue control blocks to avoid benefiting from disconnection and reconnecting;

Fig. 14 illustrates a WFQ calendar according to one preferred embodiment of the present invention and useful in the scheduler of the present invention; and

Fig. 15 illustrates a flow chart of the logic of scheduling operations used in connection with the scheduler of Figs. 3-4.

## Detailed Description of Preferred Embodiments

In the following description of preferred embodiments, the best implementations of practicing the invention presently known to the inventors will be described with some particularity. However, this description is intended as a broad, general teaching of the concepts of the present invention in a specific embodiment but is not intended to be limiting the present invention to that as shown in this embodiment, especially since those skilled in the relevant art will recognize many variations and changes to the specific structure and operation shown and described with respect to these figures.

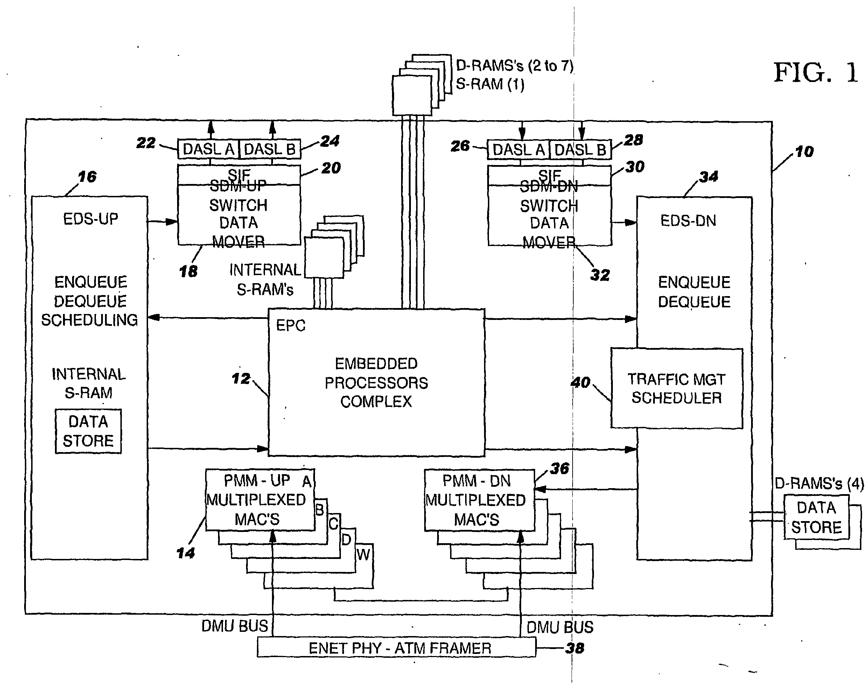

Fig. 1 shows a block diagram of the interface device chip that includes the substrate 10 and a plurality of subassemblies integrated on the substrate. The sub-assemblies are arranged into an upside configuration and a downside configuration, with the "upside" configuration (sometimes also referred to as an "ingress") referring to those components relating to data inbound to the chip from a data transmission network (up to or into the chip) and "downside" (sometimes referred to as an "egress") referring to those components whose function is to transmit data from the chip toward the data transmission network in an outbound fashion (away from the chip or down and into the network). Data flows follow the respective arrangements of the upside and downside configurations; thus, there is a upside data flow and a downside data flow in the system of Fig. 1. The upside or ingress configuration elements include an Enqueue-Dequeue-Scheduling UP (EDS-UP) logic 16, multiple multiplexed MAC's-UP (PMM-UP) 14, Switch Data Mover-UP (SDM-UP) 18, Switch Interface (SIF) 20, Data Align Serial Link A (DASL-A) 22 and Data Align Serial Link B (DASL-B) 24. It should be understood that the preferred embodiment of the present invention uses data links, other systems can be used to advantage with the present invention, particularly those which support relatively high data flows and system requirements, since the present invention is not limited to those specific auxiliary devices such as the data links which are employed in the preferred embodiment.

The components depicted on the downside (or egress) of the system include data links DASL-A 26 and DASL-B 28, switch interface SIF 30, switch data mover SDM-DN 32, enqueue-dequeue-scheduler EDS-DN 34 and multiple multiplexed MAC's for the egress PMM-DN 36. The substrate 10 also includes a plurality of internal static random access memory components (S-RAM's), a traffic management scheduler (TRAFFIC MGT SCHEDULER, also known as the Egress Scheduler) 40 and an embedded processor complex 12. An interface device 38 is coupled by the respective DMU busses to PMM 14, 36. The interface device 38 could be any suitable hardware apparatus for connecting to the L1 circuitry; such as Ethernet physical (ENET PHY) devices or asynchronous transfer mode framing equipment (ATM FRAMER), both of which are examples of devices which are well known and generally available for this purpose in the trade. The type and size of the interface device are determined, at least in part, by the network media to which the present chip and its system are attached. A plurality of external dynamic random access memory devices (D-RAMS) and a S-RAM are available for use by the chip.

While here particularly disclosed for networks in which the general data flow outside the relevant switching and routing devices is passed through electric conductors such as wires and cables installed in buildings, the present invention contemplates that the network switches and components thereof could be used in a wireless environment as well. For example, the media access control (MAC) elements herein disclosed may be replaced with suitable radio frequency devices, such as those made from silicon germanium technology, which would result in the connection of the device disclosed directly to a wireless network. Where such technology is appropriately employed, the radio frequency elements can be integrated into the VLSI structures disclosed herein by a person of skill in the appropriate arts. Alternatively, radio frequency or other wireless response devices such as infrared (IR) response devices can be mounted on a blade with the other elements herein disclosed to achieve a switch apparatus which is useful with wireless network apparatus.

The arrows show the general flow of data within the interface system shown in Fig. 1. Frames of data or messages (also sometimes referred to as packets or information units) received from an Ethernet MAC 14 off the ENET PHY block 38 via the DMU bus are placed in internal data store buffers 16a by the EDS-UP device 16. The frames may be identified as either normal frames or guided frames, which then relates to method and location of the subsequent processing in the plurality of processors. After the input units or frames are processed by one of the plurality of processors in the embedded processor complex, the completed information units are sent to the switch to be delivered to an ingress side of a network processor. Once the information units are received on the ingress side of the network processor, they are processed by one of the plurality of processors in the embedded processor complex, and when the egress processing is completed, they are scheduled through the scheduler 40 out of the processing unit 10 and onto the data transmission network through the PMM-DN multiplexed MAC's 36 and the physical layer 38.

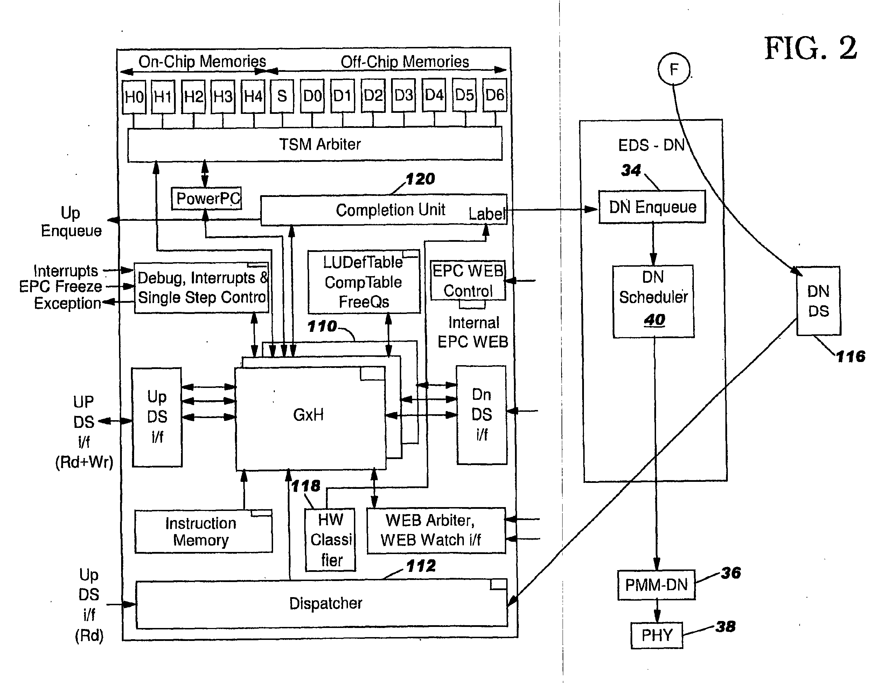

Fig. 2 is a block diagram of a processing system 100 which can employ the present invention to advantage. In this Fig. 2, a plurality of processing units 110 are located between a dispatcher unit 112 and a completion unit 114. Each egress frame F.(-from a switch, not shown, attached to the present data processing system) is received and stored into a DOWN data store (or DN DS) 116, then sequentially removed by the dispatcher 112 and assigned to one of the plurality of processing units 110, based on a determination by the dispatcher 112 that the processing unit is available to process the frame. Interposed between the dispatcher 112 and the plurality of processing units 110 is a hardware classifier assist 118. The frames which are processed by the plurality of network processors 110 go into a completion unit 120 which is coupled to the DN Enqueue 34 through a flow control system. The DN Enqueue 34 is coupled through the PMM DN MAC's 36, then by the DMU data bus to the physical layer 38 (the data transmission network itself).

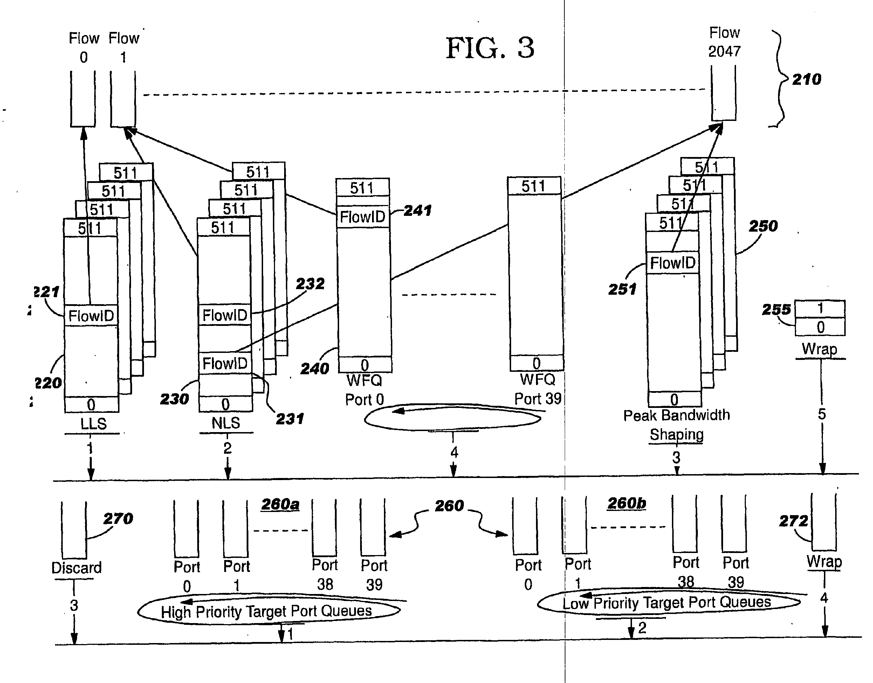

The scheduler 40 of Fig. 3 provides a structure and method of operation which permits the functions of scheduling frame transmission from a network processing unit to a data transmission network in accordance with a minimum bandwidth algorithm, peak bandwidth algorithm, weighted fair queueing techniques and maximum burst size scheduling in a single unified scheduler system.

Time based calendars are used for scheduling packets with minimum bandwidth and best effort peak rate requirements. As shown in Figure 3, three time based calendars are used for this purpose: two for minimum bandwidth and a third calendar used to limit flow queues to a maximum best effort peak rate (peak bandwidth shaping). Two calendars (LLS and NLS) provided for minimum bandwidth allow support of different classes of service within a minimum bandwidth QoS class (i.e. low latency and normal latency).

In the above mentioned calendars, pointers are used to represent a flow queue's location within the calendar. Further there may be none, one, or two such pointers to a single flow queue present in the plurality of calendars in the system. Typically, pointers in a calendar to do not represent un-initialized or empty flow queues. When a pointer to a flow queue is present in a calendar in the system, the flow queue may be referred to as being "in" the calendar.

A time period is defined as a scheduler_tick. During each scheduler_tick a unit of bandwidth may be serviced. In the preferred embodiment, this unit is defined as a "step" and has the units of time per byte (i.e. 1/Bandwidth).

In a communication system the scope of minimum bandwidth specifications for each flow queue will range through several orders of magnitude. That is, some users (or really, the associated queues for the users) will have a high bandwidth because they are transmitting large amounts of data and have paid for that bandwidth and others have chosen an economy offering to send lower quantities of information (bandwidth) at any time. In order to minimize the amount of hardware dedicated to this purpose, the preferred embodiment uses a scaling technique that permits the use of less hardware while maintaining the range and the accuracy required by a communication system and a service level agreement (SLA).

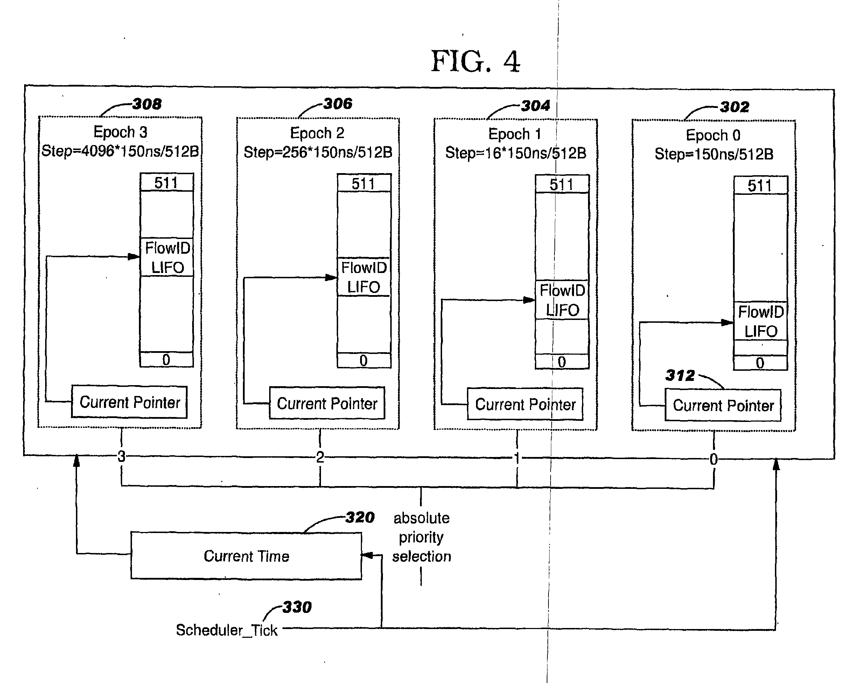

In one preferred embodiment, as shown in Fig. 4, each timer based calendar is comprised of 4 "epochs". Each epoch is comprised of 512 slots. Each slot contains a LIFO stack of pointers to flow queues. The distance between any two slots is a measurement of bandwidth and the value is dependent on the epoch. In the preferred embodiment, illustrated in Fig. 4 there is a scaling factor of 16 between each epoch. In the preferred embodiment, a scheduler_tick duration of 150ns is selected, thus in epoch 0, a distance of 1 slot represents a bandwidth of 512 bytes moved in 150ns or about 27Gb/s, while in epoch 3 a distance of 1 slot represents a bandwidth of 512 bytes moved in 0.614ms or about 6.67 Mb/s.

The number of slots per epoch and the number of epochs utilized in an embodiment is a trade off between hardware cost and design complexity and is not intended to limit the scope of the invention. As will be apparent to one skilled in relevant art, various combinations of epochs, scaling factors between epochs and the number of slots per epoch can be changed without departing from the spirit of the invention.

The Current time is a register that maintains a value for the current scheduler system time. This register is incremented once per scheduler_tick. In the preferred embodiment, the range of the current time register is selected to be four times the range of the timer based scheduler. This allows for the determination of a current time wrap when comparing the current time against one of the time stamp fields found in the flow queue control block (i.e. NextRedTime or NextGreenTime).

**Operation**

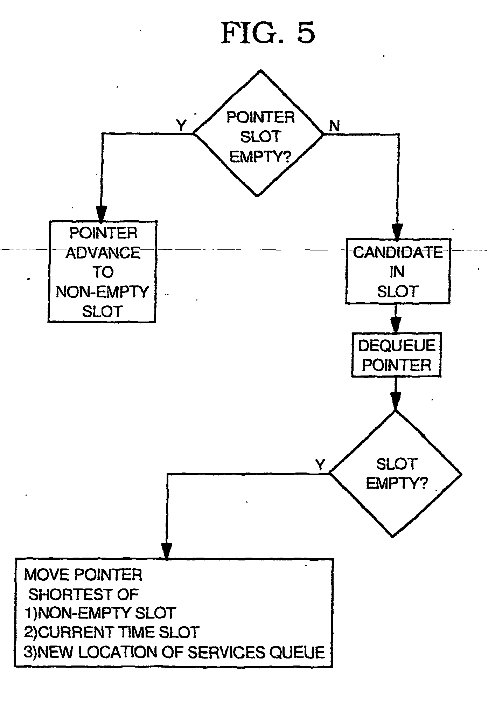

Fig. 5 illustrates the operation of the scheduler of the present invention in flow chart form. The current pointer is used to indicate the service location within each epoch. During each scheduler_tick, the slot that is indicated by the current pointer is examined. If the slot is found to be empty, then the current pointer may advance to the next non-empty slot, or to the slot corresponding to the current time. Note that since the distance between slots varies between epochs, the current pointer advances through each epoch at different rates while "keeping up" with the current time. If the slot is found to be non-empty, then a flow queue epoch candidate is found. Each epoch independently determines if a flow queue epoch candidate is found. As illustrated in Fig. 4, a flow queue calendar candidate is selected amongst the epoch candidates by the use of an absolute priority selection where the lowest numbered epoch is selected first. As illustrated in Fig. 4, selection order is:

1. Epoch 0
2. Epoch 1
3. Epoch 2
4. Epoch 3

When a flow queue epoch candidate is selected, the flow queue pointer is dequeued from the LIFO stack. If the slot indicated by the current pointer is found to be non-empty after this de-queue action, then the current pointer is left unchanged. If the slot indicated by the current pointer is found to be empty after this de-queue action then the current pointer may advance to the next non-empty slot, or to the slot corresponding to the current time, or to the slot where the flow queue service action moved the flow queue which was de-queued from the slot. The current pointer is moved the shortest of these possible distances.

The scheduler system illustrated in Fig. 3 is comprised of a plurality of flows 210, time-based calendars 220, 230, 250, weighted fair queueing (WFQ) calendars 240 and target port queues 260.

The flows 210 are control structures that are used to maintain ordered lists of frames which share common system characteristics based on assignment, that is, the level of service that the associated user has selected and paid for. These characteristics include minimum bandwidth, peak bandwidth, best effort bandwidth and maximum burst size quality of service (QoS) requirements. In addition to flow queues set up for the purpose of supporting QoS for communication systems, the preferred embodiment requires flow queues defined for the purpose of discarding frames (i.e. filtered traffic), and the wrapping of frame data from the egress to the ingress of the network processor system.

Time-based calendars 220, 230, 250 are used for scheduling packets with minimum bandwidth and best effort peak rate requirements. As shown in Fig. 3, three time based calendars are used for this purpose: two calendars 220, 230 for minimum bandwidth and a third calendar 250 used to limit flow queues to a maximum best effort peak rate (peak bandwidth shaping). Two time-based calendars 220, 230 (one calendar 220 identified as low latency service or LLS and the other calendar 230 identified as normal latency service or NLS) provide for minimum bandwidth and allow support of different classes of service within a minimum bandwidth QoS class (i.e., low latency and normal latency).

Weighted fair queuing (WFQ) calendars 240 are used for best effort service, and best effort peak service (when used in combination with one of the time-based calendars 220, 230). Further, the WFQ calendars 240 support a queue weight that allows support of different classes of service within a best effort service QoS class. In the preferred embodiment there are 40 such WFQ calendars, corresponding to the number of supported media ports (output ports). The selection of 40 such ports is a trade off between hardware cost and design complexity and is not intended to limit the scope of the invention.

In each of the above mentioned calendars, a pointer (a Flow ID) is used to represent a flow queue's location within the calendar. Thus, flow 0 has its Flow ID 221 in calendar 220, flow 1 has a FlowID 232 in calendar 230 and FlowID 241 in the WFQ 240 and flow 2047 has a FlowID 231 in calendar 230 and FlowID 251 in calendar 250, all as indicated by the arrows in Fig. 3. Further there may be none, one, or two such pointers to a single flow queue present in the plurality of calendars in the system. Typically, pointers in a calendar to do not represent un-initialized or empty flow queues. When a pointer to a flow queue (or a FlowID) is present in a particular calendar in the system, the flow queue may be referred to as being "in" that particular calendar.

Target port queues are control structures used to maintain ordered lists of frames that have common port destination and priorities. In the preferred embodiment, 2 priorities per media port (or output port) are provided to allow support of different classes of service, a so-called high priority target port queue and a so-called low priority target port queue. The selection of 2 priorities is a trade off between hardware cost and design complexity and is not intended to limit the scope of the invention. Further, the preferred embodiment includes a separate wrap queue 272 and a discard port queue 270.

Each of the time-based calendars 220, 230 and 250 consists of a plurality of epochs, with four shown for each in Fig. 3 as represented by the overlapping rectangles. Fig. 4 shows the four epochs 302, 304, 306 and 308 along with a typical timing arrangement for the epochs where the first epoch 302 (labeled epoch0) has a step of the scheduler tick (allowing 512 bytes every 150 nsec in this case), the second epoch 304 has a step of 16 times that of the first epoch 302, with the third epoch 306 having the same ratio to the second epoch 304 and the fourth epoch 308 having the same ratio to the third epoch 306.In this way, the first epoch 302 has a high priority (it is scheduled for service sixteen times as often as the second epoch 304), creating a hierarchy of service priorities which will have associated increases in cost. A current pointer (e.g., 312 for epoch 302) is associated with each epoch to provide a pointer as to where in the queue the processing is currently located. Since the present system of progressing through the epochs is to increment the current pointer, the direction of processing is from lower to higher in the epoch. Also shown in this Fig. 4 is the current time 320 and a scheduler tick 330 which drives the clock 320 as well as driving the steps within each epoch.

The priority selection is an absolute priority selection, which means that since only one can be serviced during any interval, the one with the highest priority is serviced. If the current pointer in each of the epochs points to a data flow, the lowest one (epoch0) will be serviced. If epoch 0 requires no service, then epoch1 is serviced, then epoch2, etc.

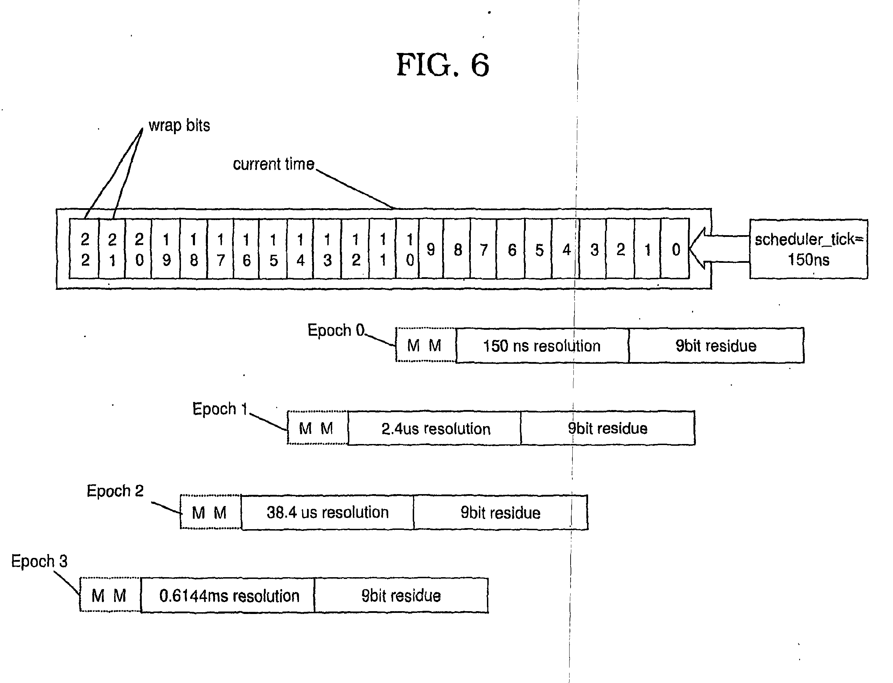

Fig. 6 illustrates the time resolution of bits for each of the epochs of Fig. 4. That is, it tells you which bits in the current time store (a 23 bit counter) are associated with each of the epochs as describer later in this document.

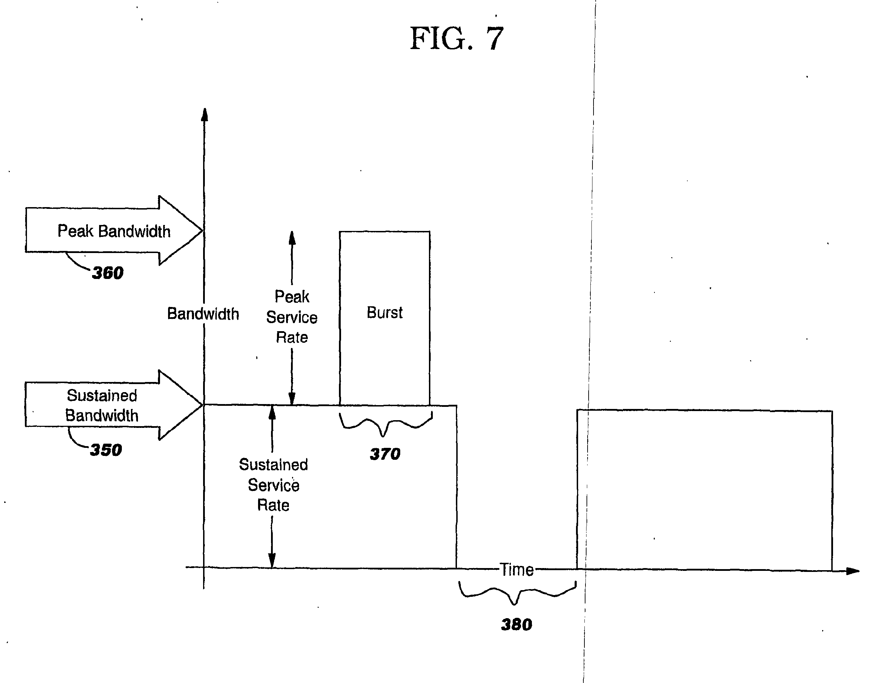

Fig. 7 illustrates the parameters of the communications from a user. The bandwidth used is plotted on the Y axis and time on the X axis. A user may have assigned a sustained bandwidth marked with arrow 350 and may be permitted to have a peak burst bandwidth marked with arrow 360 for a duration shown by the width 370 of the burst. A delay or quiet time shown by the absence of bandwidth during the time 380 may be imposed as a price for using the peak burst bandwidth and may be enforced through the use of credits known as MBS as will be explained in detail later in this document.

When a queue becomes empty, it is removed from the calendars in a form of disconnection. When a queue which is not in any calendar begins to send frames, it is treated as a new queue in a process called connection (or re-connection for the return of a queue which has previously been sending frames.) The process of disconnection and then reconnection might have the undesirable result of allowing the queue to advance to the head of the line, in front of where it would be if it was continuing in its place with its priority calculated after each servicing.

Conversion of current time to time based calendar location

Current time is converted into a location within the timer based calendar by examination of the current time, the scaling factors between epochs and the number of slots used for each epoch. In the preferred embodiment, the scaling factor is 16 and there are 512 slots in each epoch, hence nine bits are required for each epoch to identify a location within the epoch. As illustrated in Figure 6, bits 8 through 0 are used to define a location within epoch 0, bits 12 through 4 for epoch 1, bits 16 through 8 for epoch 2 and bits 20 through 12 for epoch 3.

Determining the location in a WFO calendar when adding a flow queue.

This invention contemplates the use of a weighted fair queue where bandwidth which is not needed for minimum bandwidth customers can be used on a best effort basis with users sharing according to a formula which determines the order for the next service in the queue based on a weight or priority and the length of frame.
When a packet is enqueued to a flow queue, and the flow queue is added to a WFQ, the location within the WFQ calendar 240 of Fig. 3 is determined in one of the following fashions.

   1. Add to the location indicated by the WFQ calendar's current pointer.
   2. Add to the location immediately preceding the location indicated by the WFQ calendar's current pointer.
   3. Use the weight of the flow queue, QD, to determine the distance from the location indicated by the current pointer.

In the preferred embodiment, the weight of the flow queue is used to determine the distance from the location indicated by the current pointer that the flow queue will be located. The distance calculation has the form:

$$\text{Slot distance} = \text{Min}((QD * S), 1)$$

Where S is a scaling factor that may take on any positive integer value. In the preferred embodiment the scaling factor S is 16.

Conversion of current time to NextGreenTime

NextGreenTime is the time stamp field used by a WFQ calendar 240 to provide peak bandwidth shaping (in combination with the peak bandwidth shaping calendar). Converting the current time into the NextGreenTime (NxtGT.V, NxtGT.E in the preferred embodiment) requires examination of the peak service rate field of the flow queue control block.
In the preferred embodiment, the value of PSD.E, is used to determine the bits used from the current time for the NxtGT.V field as shown below:

| PSD.E | current time bits |
|---|---|
| 0 | 8 through 0 |
| 1 | 12 through 4 |
| 2 | 16 through 8 |
| 3 | 20 through 12 |

The NxtGT.E is set equal to the value of PSD.E.

Comparison (later than test) between NextRedTime or NextGreenTime and current time

In the preferred embodiment, the following steps comprise the method which allows a comparison between a time stamp from the flow queue control block with the current time.
1. Select bits from current time to perform the comparison. This set requires examination of the "dot E" field from the time stamp (NextRedTime or NextGreenTime) that is to be compared.

| dot E | current time bits |
|---|---|
| 0 | 8 through 0 |
| 1 | 12 through 4 |
| 2 | 16 through 8 |

(continued)

| dot E | current time bits |
|---|---|
| 3 | 20 through 12 |

2. To determine if a "A" is later than "B", first form the 2's complement of B and then add the result to A ignoring any carry out from the operation. When the result is non-zero, and the most significant bit of the result is 0, then A is later than B, otherwise B is later than A.

Conversion of NextRedTime or NextGreenTime into a location in a time based calendar

The time stamp fields in the flow queue control block serve as part of the method which prevents a flow queue from violating its service parameters. In the preferred embodiment, the "dot E" field indicates the epoch and the "dot V" field indicates the distance from location 0 within the epoch.

NextGreenTime calculation when a flow is in violation of peak rate (use NextGreenTime as base)

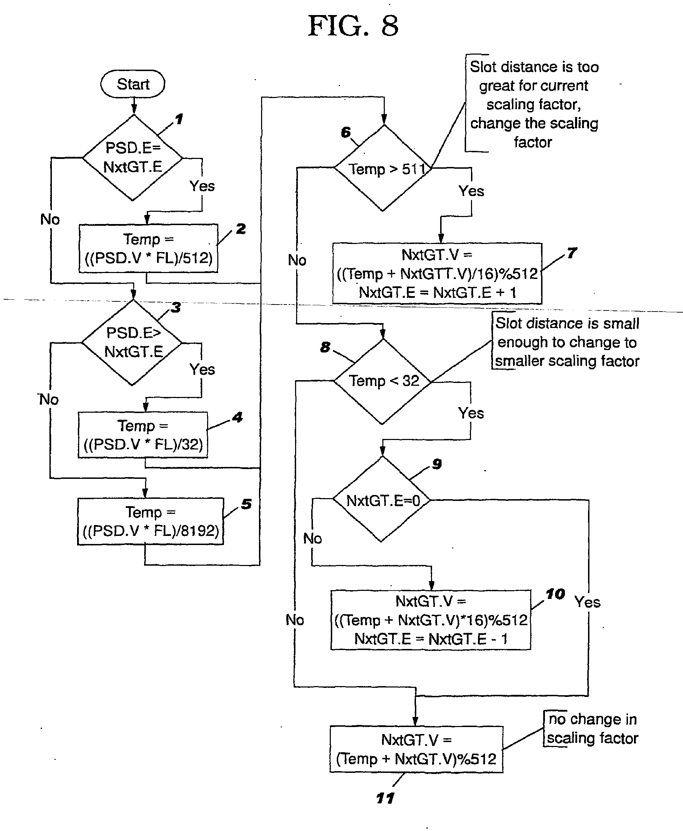

In the preferred embodiment, the calculation of the NextGreenTime when a flow is in violation of its peak rate is determined by an examination of the BCI, which determines the packet length in bytes, the peak service rate, and the current value of the NextGreenTime. In Fig. 8, FL represents the byte length of the frame as determined from the BCI. The process blocks are described below.

Process 2 is a slot distance calculation (Temp)when the scaling factors (dot E) are the same for both the NextGreenTime and the peak service rate.

Process 4 is a slot distance calculation (Temp) when the peak service rate scaling factor is greater than the scaling factor for the NextGreenTime.

Process 5 is a slot distance calculation (Temp) when the peak service rate scaling factor is less than the scaling factor for the NextGreenTime.

Process 7 is a calculation of the NxtGT.V and NxtGT.E values when the slot distance (Temp) is greater than the capacity of the current scaling factor (for the preferred embodiment, the dot V values cannot exceed 511).

Process 10 is a calculation of the NxtGT.V and NxtGT.E values when the slot distance (Temp) allows for a reduction of the current scaling factor. This is desirable since the smaller the scaling factor, the more accurate the time base.

Process 11 is a calculation of the NxtGT.V value when the slot distance (Temp) does not require or allow a change of the current scaling factor. The value of NxtGT.E remains unchanged.

NextGreenTime calculation when a flow is not in violation of peak rate use current time as base)

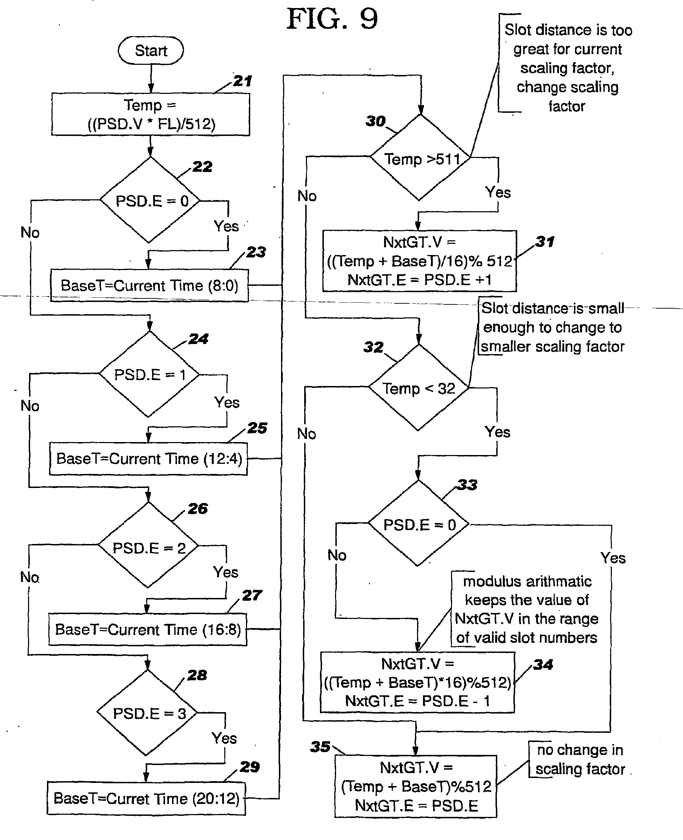

In the preferred embodiment, the calculation of the NextGreenTime when a flow is not in violation of its peak rate is determined by an examination of the BCI, which determines the packet length in bytes, the peak service rate, and the current time, and is illustrated in Fig. 9. The process blocks are described below. In Fig.9 , FL represents the byte length of the frame as determined from the BCI.

Process 21 is a slot distance calculation (Temp). Based on the scaling factor used for the peak service rate, process blocks 23, 25, 27, and 29 assign the value of the base time (BaseT) from bits in the current time register. NextGreenTime will be determined from the slot distance, the scaling factor and the base time.

Process 31 is a calculation of the NxtGT.V and NxtGT.E values when the slot distance (Temp) is greater than the capacity of the current scaling factor (for the preferred embodiment, the dot V values cannot exceed 511).

Process 34 is a calculation of the NxtGT.V and NxtGT.E values when the slot distance (Temp) allows for a reduction of the current scaling factor. This is desirable since the smaller the scaling factor, the more accurate the time base.

Process 35 is a calculation of the NxtGT.V and NxtGT.E values when the slot distance (Temp) does not require or allow a change of the current scaling factor.

MBS earned credit calculation

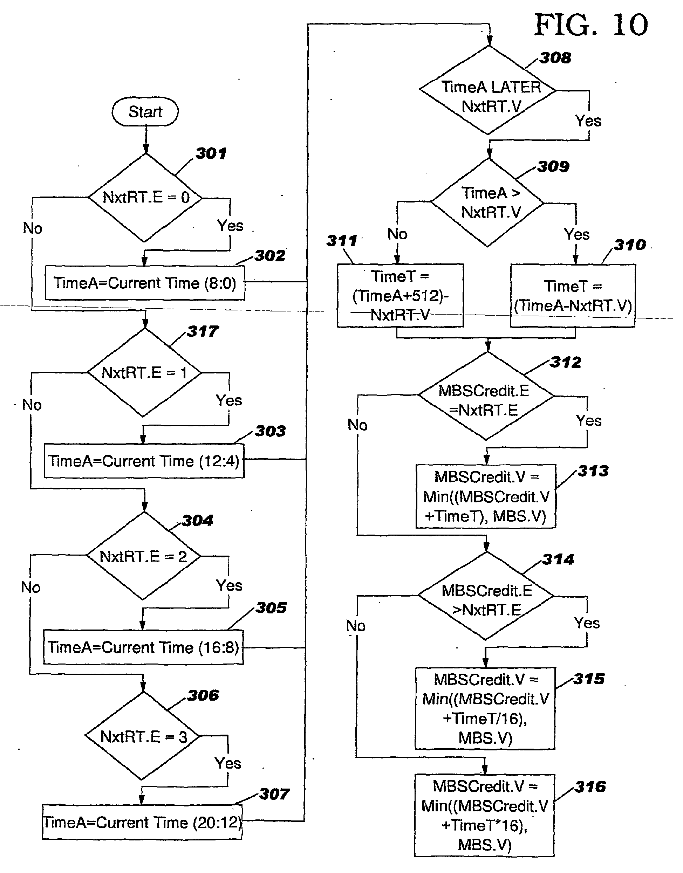

In the preferred embodiment, a flow queue which is in use (QinUse=1) with a non-zero Max Burst field, earns tokens when the flow queue is empty. The MBSCredit field is updated when a packet is enqueued into the empty flow queue. To determine the number of tokens earned, the NextRedTime and the current time are examined, and is illustrated in Fig. 10.

Based on the scaling factor used by the NextRedTime, bits from the current time are selected in process blocks 302, 303, 305, and 307 to create a scaled time (TimeA) used to determine how long the flow queue has been empty.

Decision block 308 determines if TimeA is later than the time indicated by the NextRedTime time stamp field. Using the NextRedTime for this purpose requires that the flow queue remains empty after it's next possible scheduling time. If TimeA is not later than the NextRedTime, then no further action is taken.

Decision block 309 deals with the timer wrap cases and allows the calculation of duration (TimeT) which the flow queue is accumulating tokens in process blocks 311 and 310.

Process blocks 313, 315, and 316 are the final calculations for MBSCredit.V. Decision blocks 312 and 314, determine if TimeT requires adjustment due to scaling factors used to define the MBS field.

MBS credit used calculation

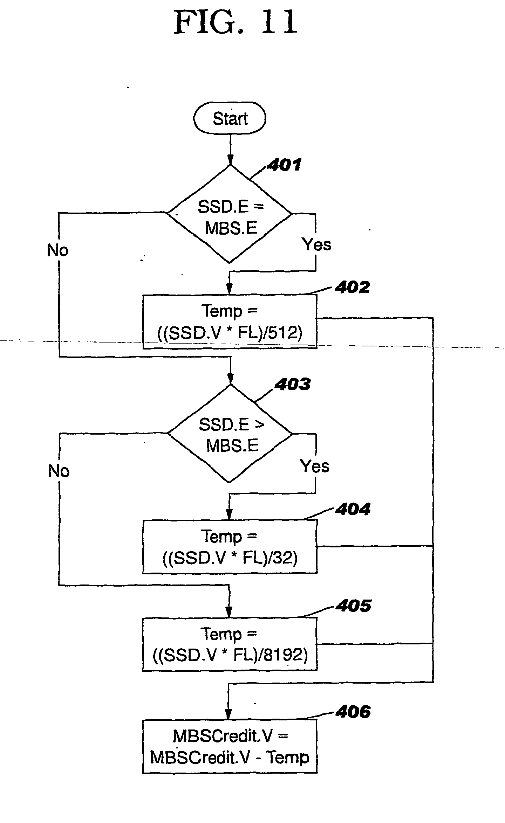

The new value for MBSCredit is determined from the current value of MBSCredit, the BCI to determine the frame length, and the sustained service rate. Using the sustained rate is due to the method used when calculating the MBS value (which removed complex division from the equations.) In the preferred embodiment, MBSCredit may take on negative values. The process blocks are described below. In Fig. 11, FL represents the byte length of the frame as determined from the BCI.

Process blocks 402, 404 and 405 determine number of tokens used for a frame of length FL. Decision blocks 401 and 403 are used to determine if Temp requires adjustment due to scaling factors used to define the MBSCredit field.

Process block 406 adjusts the value of MBSCredit.V by the number of tokens used.

Flow queue control block aging

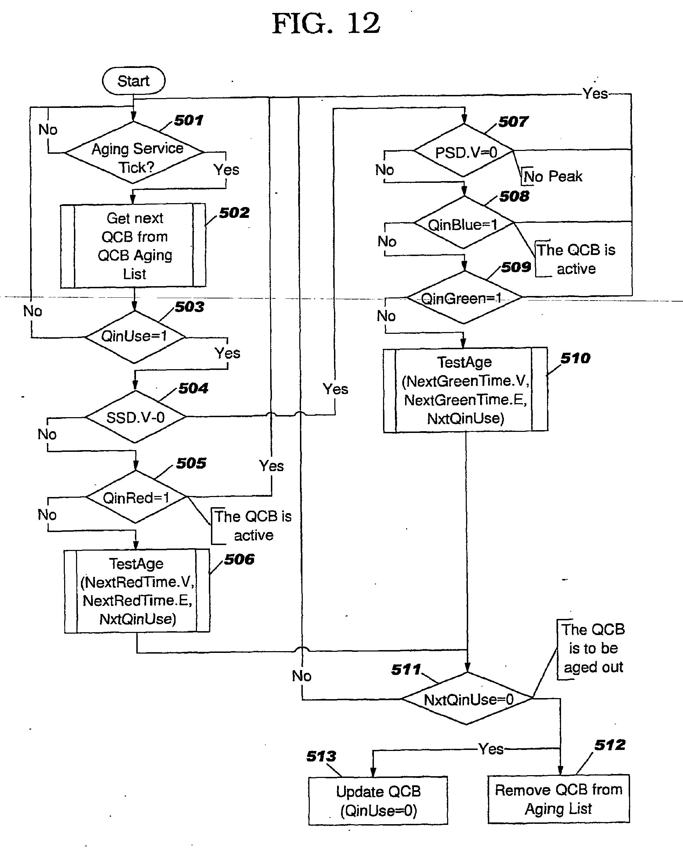

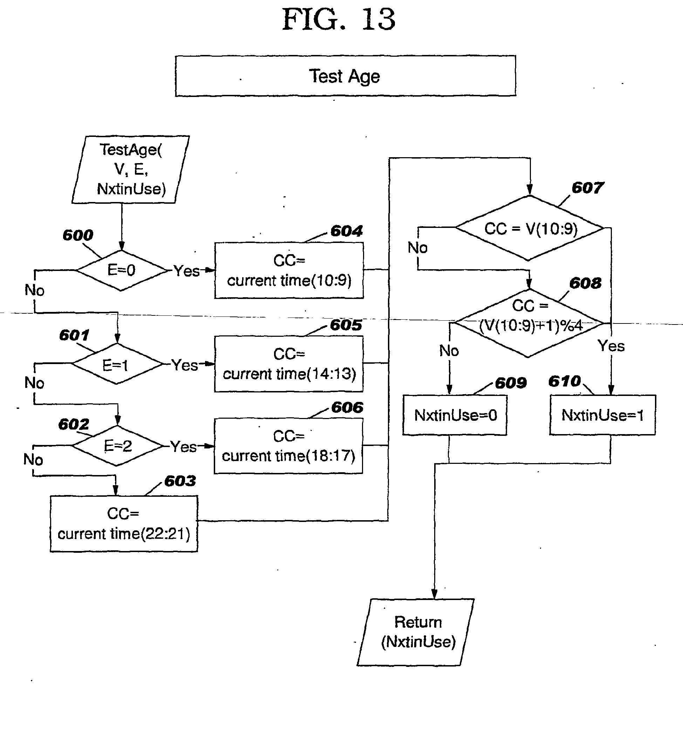

The use of scaling factors in the flow queue control block reduces the hardware needed for the maintenance of timestamp fields. In order to accurately determine when a time stamp is too old to be relevant a method is required to indicate that the time stamp and residue fields are not valid. Figs. 12 and 13 illustrate a method of marking flow queue control blocks whose time stamps are no longer valid.

Added to the scheduler system is a list of all flow queue control blocks that are currently in use (QinUse=1). Those skilled in the art know there are many ways to maintain such a list.

In the preferred embodiment, the dot V fields of the time stamp fields are extended by two bits. These additional bits are taken from the current time pointer when the time stamp fields are updated. The bits used from the current time pointer are determined by the value of the dot E field, as illustrated in Figure 6, and is as follows:

| dot E | current time bits used |
| --- | --- |
| 0 | 10 through 9 |
| 1 | 14 through 13 |
| 2 | 18 through 17 |
| 3 | 22 through 21 |

A timer is used to determine when the process of checking flow queue control blocks occurs. Referring to Fig. 12, the method starts with a check of an 'Aging Service Tick'. This when true, the process continues with selecting a flow queue control block (QCB) from the aging list 502. The process continues at 503 with a check of the QinUse field of the selected flow queue control block.

If the flow queue control block is not in use the process returns to 501 and waits for the next service tick, otherwise the process continues with an examination of the sustained service rate field 504 and the QinRed field 505. If the flow queue has a specification for sustained service and the flow queue is not in either the LLS or NLS calendar (QinRed=0), then a determination of aging occurs at 506. The actions taken for "TestAge" are described below.

If the flow queue does not have a sustained service rate specification, the peak service rate field is examined 507. If there is no peak service rate specified, the process continues at 501 and waits for the next service tick. If a peak service rate is specified, then the flow queue control block is examined to determine if the flow queue is in either a WFQ calendar 508 or in the peak bandwidth shaping calendar 509. If the flow queue is in either, the process returns to 501, otherwise a determination of aging occurs at 510. The actions taken for "TestAge" are described below.

TestAge, illustrated in Fig. 13, uses as input one of the timestamp fields of the flow queue control block, and the current time. It returns to the process an update to the state of the QinUse field. In flowchart 5, this result is used in 512 and 513 to update the flow queue control block and to remove the flow queue control block from the aging list.

Returning to Fig. 13, the TestAge process uses the scaling factor E to determine which bits of the current time are used to determine if the time stamp field is too old to retain its usefulness. Blocks 600 through 606 accomplish this task.

Continuing at 606 and 607, a comparison is made between the high order bits of the dot V field (MM bits as defined above and illustrated in Figure 3.) and the selected bits of the current time. The tests in 607 and 608 determine if the epoch associated with the time stamp has wrapped more than once since Last updated. If more than one wrap has occurred, the time stamp is no longer usable and the time stamp fields are marked invalid by the action of setting the QinUse bit to zero, otherwise the QinUse bit is left unchanged (blocks 609, 610).

Weighted fair queuing (WFQ) calendars are used for so-called "best effort" service, and, when used in combination with a time-based calendar, a so-called "best effort peak" service. That is, a best effort service obtains no guaranteed bandwidth (where x bits of bandwidth is provided every unit of time), but competes with the other users for the bandwidth remaining after the guaranteed bandwidth customers are satisfied. This is a lower level of service than guaranteed bandwidth and normally significantly less expensive. The so-called "best effort peak" service provides a competitive sharing of excess bandwidth on a resource for requirements above the guaranteed level of service which a user has subscribed. So, a user might buy 10 Mbits per second of service along with a best effort for a peak of an additional 5 Mbits, for a total peak service of 15 Mbits of service (the last 5 Mbits of service are provided if and only if it is available and a fair sharing with other users of the weighted fair queueing allows it).

Further, the WFQ calendars support a queue weight that allows support of different classes of service within a best effort service QoS class. As used herein, a queue weight is a relative priority which is assigned to a given user based on his level of service. The queue weight relates to the amount of delay between service in the weighted fair queueing system described in connection with this system. In the preferred embodiment, as illustrated in Fig. 3, there are 40 such WFQ calendars, corresponding to the number of supported media ports. The selection of 40 such ports is an arbitrary design choice which involves a trade off between hardware cost and design complexity and is not intended to limit the scope of the invention.

A period (or clock interval) is defined as a scheduler_tick; this amounts to either 150 or 165 nanoseconds, depending on the response time of the hardware being accessed, but this could be greater or lesser period depending on design parameters and hardware capabilities. During a scheduler_tick a flow queue is selected for service. The selection algorithm described results in the WFQ calendars being selected when all flow queues with minimum bandwidth specifications (sustained service rate) do not require service (i.e., the left over bandwidth managed by the scheduler is available for use by the WFQ calendars.) Put another way, the time-based queues 220, 230 are served during each clock interval if they are scheduled and have information to transmit; if not, the WFQ queue 240 is served during the clock interval. In contrast to the timer based schedulers, where the total minimum bandwidth of the network processor may be managed, each WFQ calendar manages the best effort bandwidth for one target port. The purpose of the WFQ calendar or queue 240 is to share fairly amongst competing flow queues this best effort bandwidth. This is accomplished by accounting for the number of bytes transmitted by a flow queue that is selected for service and moving the flow queue within the calendar a distance from its present location based on the number of bytes transmitted. That is, the more bytes that a flow transmits during a scheduler_tick, the farther up the calendar (and more intervening flows and thus the longer the period) before the next service.

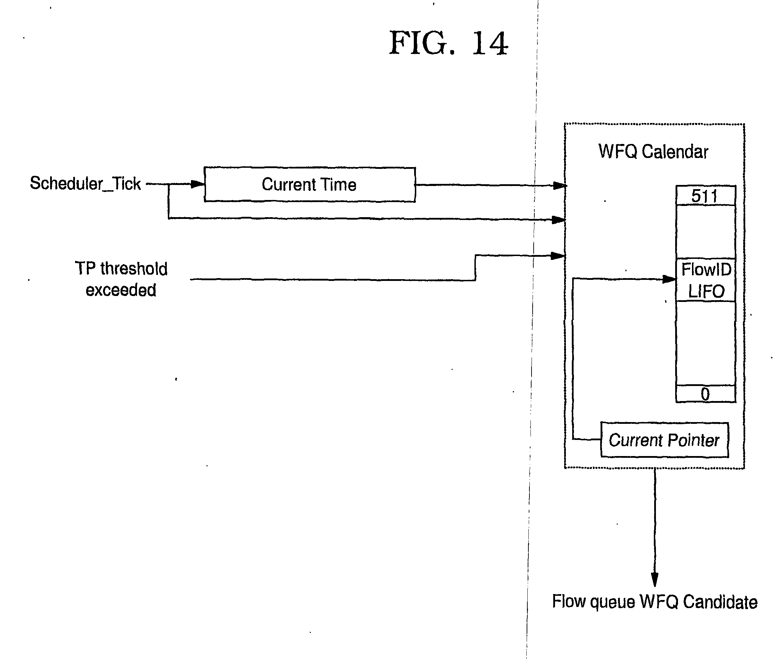

In one preferred embodiment, as shown in Fig. 14, a WFQ calendar 240a is comprised of 512 slots. Each slot contains a LIFO stack of pointers to flow queues. The number of slots utilized in an embodiment is a trade off between hardware cost and design complexity and is not intended to limit the scope of the invention.

Still referring to Fig. 14 , current time is a register that maintains a value for the current scheduler system time. This register is incremented once per scheduler_tick. In the preferred embodiment, the range of the current time register is selected to be four times the range of the timer based calendars. This allows for the determination of a current time wrap when comparing the current time against one of the time stamp fields found in the flow queue control block (i.e. NextGreenTime).

The current pointer is used to indicate the service location within the WFQ calendar. In contrast to the timer based calendars, the current pointer is unrelated to the scheduler system time.

**Operation**

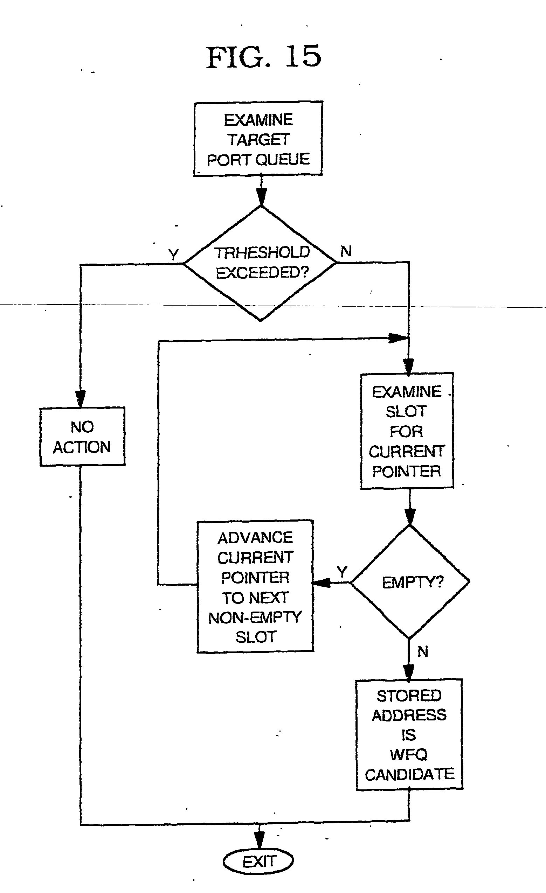

As shown in the flow chart of Fig. 15, during each scheduler tick, the state of each target port queue is first examined. Each of the WFQ calendars is associated with a pair of ports; thus, WFQ Port 0 is associated with a higher priority port 0 and a lower priority port 0. If the target port queue's threshold has been exceeded on line 262, no further action is taken by that WFQ calendar during the scheduler_tick.. (This system provides a form of back pressure to limit the output, preventing frames from being sent out that the system can not handle.) If the target port queue's threshold has not been exceeded, the slot that is indicated by the current pointer is then examined. If the slot is found to be empty, then the current pointer may advance to the next non-empty slot to find a flow queue WFQ candidate. If all slots are found to be empty, the current pointer is unchanged and no candidate is found. If the slot is found to be non-empty within this one calendar, then the flow queue address in stored in the slot is the WFQ candidate for this port. Each of the 40 WFQ calendars will similarly be able to find a candidate for its associated target port queue.

The purpose of the examination of the target port threshold is to control the rate at which packets are assigned to the target port queue from the WFQ calendar. Since the target port queue will drain at the rate specified by the attached media, the examination of the status of the target port exceeding the threshold provides a mechanism that assures that the target port queue is not assigned packets at a rate exceeding its media's bandwidth. In the preferred embodiment, the threshold is defined as a measurement of bytes, and the threshold should be set to at least the maximum transmission unit (MTU) defined for the media in order to assure proper operation.

Since it is a goal of the invention to provide a method of best effort bandwidth scheduling in combination with minimum bandwidth, where a single flow queue is in both a time based calendar and a WFQ calendar, the above mechanism is necessary for proper function.

Final flow queue selection occurs amongst all the calendars (both time-based calendars and the WFQ calendars). When a flow queue WFQ candidate is selected, the flow queue pointer is de-queued from the LIFO stack. If the slot indicated by the current pointer is found to be non-empty after this de-queue action (i.e, at least one more entry exists in it), then the current pointer is not modified further. If the slot indicated by the current pointer is found to be empty after this de-queue action, then the current pointer will advance to the next non-empty slot. If all slots are found to be empty, the current pointer is unchanged.

As one skilled in the art will appreciate, a WFQ calendar shares available bandwidth amongst all flow queues assigned to it. Further, by assigning a weight to a flow queue, the relative proportion of bandwidth allocated to each flow queue can be altered. This is accomplished through the calculation of the location a non-empty serviced flow queue is placed. A low weight factor provides for more frequent service for a given frame length, meaning that the associated flow is moved a shorter distance up the "ladder" for the next service than a high weight factor for the same length of frame. Similarly, a flow providing longer frames will be moved a greater distance up the ladder than one providing shorter frames having the same weight factor, meaning that the one with shorter frames will receive more frequent service, given the same priority or weight factor.

WFO distance calculation

A distance calculation is defined as the number of slots a flow queue is moved in the calendar from the location it is de-queued from. In the preferred embodiment, the distance calculation for the WFQ calendar has the form:

```
Slot distance = Max( Min(((Frame Length) * QD *K), max_distance), 1)
```

where the slot distance is an integer number, frame length is measured in bytes, QD is the queue weight specified in the flow queue control block, max_distance is defined as the number of slots in the calendar less 1, and K is a scaling factor assigned to the target port. Specification of K is determined from the MTU of the target port, the number of slots in the WFQ calendar, and the range of QD desired. For the preferred embodiment, the following values of K are recommended:

MTU (Bytes) K
2048 1/64th
9216 1/256th
16384 1/1024th

Other values of K can be selected without departing from the spirit of the invention.

Many modifications of the present invention will be apparent to those skilled in the relevant art in view of the foregoing description of the preferred embodiments, taken together with the accompanying drawings. For example, the weighting based on frame size and stored weighting factors can be replaced with other formulas. The number of slots within a calendar and the number of calendars per port can be changed to accommodate the architecture of the system. The number of epochs and the distance of each of their steps, the size of the current time register, the scheduler_tick rate could be changed without departing from the scope of the present invention. Additionally, many modifications can be made to the system implementation and the system of priorities and various algorithms can be used for determining the priorities without departing from the scope of the present invention. Further, some of the features of the present invention can be used without the corresponding use of other features. Accordingly, the foregoing description of the preferred embodiment should be considered as merely illustrative of the principles of the present invention and not in limitation thereof.

# EP 1 273 140 B1

**Claims**

1. A method for preventing a flow to achieve a more favorable position in a queue as a result of disconnecting and reconnecting comprising the steps of:

   placing data flows into queues for service in turn as information units pass in a data communications system from a plurality of sources toward a plurality of destinations;
   determining whether a data flow had a previous position in the queues;
   if the data flow had a previous position in the queues, determining whether a new position which would be assigned is more favorable than the previous position;
   if the new position which would be assigned is more favorable, handling the flow using the previous position; and
   if the previous position is no more favorable than the new position which would be assigned, handling the flow using the new position.

2. A method according to Claim 1, further comprising the steps of:

   determining whether a flow has had a place in a time-based calendar and preventing a flow which has had such a place in the time-based calendar from achieving a more favored place in the time-based calendar as a result of disconnecting and reconnecting.

3. An apparatus for preventing a flow to achieve a more favorable position in a queue as a result of disconnecting and reconnecting comprising:

   means for placing data flows into queues for service in turn as information units pass in a data communications system from a plurality of sources toward a plurality of destinations;
   means for determining whether a data flow had a previous position in the queues;
   means, responsive to the data flow having a previous position in the queues, for determining whether a new position which would be assigned is more favorable than the previous position;
   means, responsive to the new position which would be assigned being more favorable, for handling the flow using the previous position; and
   means, responsive to the previous position being no more favorable than the new position which would be assigned, for handling the flow using the new position.

4. An apparatus according to Claim 3, further comprising:

   means for determining whether a flow has had a place in a time-based calendar and means for preventing a flow which has had such a place in the time-based calendar from achieving a more favored place in the time-based calendar as a result of disconnecting and reconnecting.

5. A computer program for preventing a flow to achieve a more favorable position in a queue as a result of disconnecting and reconnecting comprising program code means adapted to perform all the steps of any of claims 1 to 2 when said program is run on a computer.


**Patentansprüche**

1. Verfahren, um zu verhindern, dass ein Fluss als Folge des Trennens und Wiederherstellens einer Verbindung eine günstigere Position in einer Warteschlange erzielt, wobei das Verfahren die folgenden Schritte umfasst:

   Stellen von Datenflüssen in Warteschlangen, damit sie der Reihe nach bedient werden, während Dateneinheiten in einem Datenübertragungssystem von einer Vielzahl von Quellen an eine Vielzahl von Zielen übertragen werden;
   Feststellen, ob ein Datenfluss eine bisherige Position in den Warteschlangen einnahm;
   wenn der Datenfluss eine bisherige Position in den Warteschlangen einnahm, Feststellen, ob eine neue Position, die zugewiesen würde, günstiger als die bisherige Position ist;
   wenn die neue Position, die zugewiesen würde, günstiger ist, Verarbeiten des Flusses unter Verwendung der bisherigen Position; und
   wenn die bisherige Position nicht günstiger als die neue Position ist, die zugewiesen würde, Verarbeiten des

**13**

Flusses unter Verwendung der neuen Position.

**2.** Verfahren nach Anspruch 1, das des Weiteren die folgenden Schritte umfasst:

Feststellen, ob ein Fluss eine Position in einem zeitbasierten Kalender einnahm, und Verhindern, dass ein Fluss, der eine solche Position in dem zeitbasierten Kalender einnahm, als Folge des Trennens und Wiederherstellens einer Verbindung eine günstigere Position in dem zeitbasierten Kalender erzielt.

**3.** Vorrichtung, um zu verhindern, dass ein Fluss als Folge des Trennens und Wiederherstellens einer Verbindung eine günstigere Position in einer Warteschlange erzielt, wobei die Vorrichtung Folgendes umfasst:

ein Mittel, um Datenflüsse in Warteschlangen zu stellen, damit sie der Reihe nach bedient werden, während Dateneinheiten in einem Datenübertragungssystem von einer Vielzahl von Quellen an eine Vielzahl von Zielen übertragen werden;
ein Mittel, um festzustellen, ob ein Datenfluss eine bisherige Position in den Warteschlangen einnahm;
ein Mittel, das darauf anspricht, dass der Datenfluss eine bisherige Position in den Warteschlangen einnahm, um festzustellen, ob eine neue Position, die zugewiesen würde, günstiger als die bisherige Position ist;
ein Mittel, das darauf anspricht, dass die neue Position, die zugewiesen würde, günstiger ist, um den Fluss unter Verwendung der bisherigen Position zu verarbeiten; und
ein Mittel, das darauf anspricht, dass die bisherige Position nicht günstiger als die neue Position ist, die zugewiesen würde, um den Fluss unter Verwendung der neuen Position zu verarbeiten.

**4.** Vorrichtung nach Anspruch 3, die des Weiteren Folgendes umfasst:

ein Mittel, um festzustellen, ob ein Fluss eine Position in einem zeitbasierten Kalender einnahm, und ein Mittel, um zu verhindern, dass ein Fluss, der eine solche Position in dem zeitbasierten Kalender einnahm, als Folge des Trennens und Wiederherstellens einer Verbindung eine günstigere Position in dem zeitbasierten Kalender erzielt.

**5.** Rechnerprogramm, das dazu dient zu verhindern, dass ein Fluss als Folge des Trennens und Wiederherstellens einer Verbindung eine günstigere Position in einer Warteschlange erzielt, wobei das Rechnerprogramm ein Programmcode-Mittel umfasst, das so ausgelegt ist, dass es alle Schritte nach einem der Ansprüche 1 bis 2 durchführt, wenn das Programm auf einem Rechner ausgeführt wird.

**Revendications**

**1.** Procédé destiné à empêcher un flux d'obtenir une position plus favorable dans une file d'attente en conséquence d'une déconnexion et d'une reconnexion comprenant les étapes consistant à :

placer des flux de données dans des files d'attente en vue d'une prise en charge à leur tour à mesure que des unités d'informations passent dans un système de communications de données d'une pluralité de sources vers une pluralité de destinations,
déterminer si un flux de données avait une position précédente dans les files d'attente,
si le flux de données avait une position précédente dans les files d'attente, déterminer si une nouvelle position, qui serait affectée, est plus favorable que la position précédente,
si la nouvelle position, qui serait affectée, est plus favorable, prendre en charge le flux en utilisant la position précédente, et
si la position précédente n'est pas plus favorable que la nouvelle position qui serait affectée, prendre en charge le flux en utilisant la nouvelle position.

**2.** Procédé selon la revendication 1, comprenant en outre les étapes consistant à :

déterminer si un flux a eu une place dans un calendrier fondé sur le temps et empêcher qu'un flux, qui a eu une telle place dans le calendrier fondé sur le temps, ne prenne une place plus favorable dans le calendrier fondé sur le temps en conséquence d'une déconnexion et d'une reconnexion.

**3.** Dispositif destiné à empêcher un flux d'obtenir une position plus favorable dans une file d'attente en conséquence d'une déconnexion et d'une reconnexion comprenant :

un moyen destiné à placer des flux de données dans des files d'attente en vue d'une prise en charge à leur tour lorsque des unités d'informations passent dans un système de communications de données d'une pluralité de sources vers une pluralité de destinations,
un moyen destiné à déterminer si un flux de données avait une position précédente dans les files d'attente,
un moyen, en réponse au fait que les flux de données avaient une position précédente dans les files d'attente, destiné à déterminer si une nouvelle position, qui serait affectée est plus favorable que la position précédente,
un moyen, en réponse au fait que la position qui serait affectée serait plus favorable, destiné à prendre en charge le flux en utilisant la position précédente, et
un moyen, en réponse au fait que la position précédente n'est pas plus favorable que la nouvelle position qui serait affectée, destiné à prendre en charge le flux en utilisant la nouvelle position.

4. Dispositif selon la revendication 3, comprenant en outre :

un moyen destiné à déterminer si un flux a eu une place dans un tel calendrier fondé sur le temps et un moyen destiné à empêcher qu'un flux, qui a eu une telle place dans le calendrier fondé sur le temps, ne prenne une place plus favorable dans le calendrier fondé sur le temps en conséquence d'une déconnexion et d'une reconnexion.

5. Programme informatique destiné à empêcher un flux d'obtenir une position plus favorable dans une file d'attente en conséquence d'une déconnexion et d'une reconnexion, comprenant un moyen de code de programme conçu pour exécuter toutes les étapes selon l'une quelconque des revendications 1 à 2, lorsque ledit programme est exécuté sur un ordinateur.

FIG. 1

# FIG. 2

On-Chip Memories | Off-Chip Memories

| H0 | H1 | H2 | H3 | H4 | S | D0 | D1 | D2 | D3 | D4 | D5 | D6 |

TSM Arbiter

PowerPC

*120*

Completion Unit — Label

Up Enqueue

Interrupts
EPC Freeze
Exception

Debug, Interrupts &
Single Step Control

LUDefTable
CompTable
FreeQs

EPC WEB
Control

Internal
EPC WEB

*110*

UP DS i/f (Rd+Wr)

Up DS i/f

GxH

Dn DS i/f

*118*

Instruction Memory

HW Classi fier

WEB Arbiter,
WEB Watch i/f

Up DS i/f (Rd)

*112*

Dispatcher

EDS - DN

*34*

DN Enqueue

DN Scheduler
**40**

DN DS

*116*

PMM-DN — *36*

PHY — *38*

F

EP 1 273 140 B1

FIG. 3

EP 1 273 140 B1

# FIG. 4

EP 1 273 140 B1

# FIG. 5

FIG. 6

# FIG. 7

Peak Bandwidth
360

Sustained
Bandwidth
350

Bandwidth

Peak
Service
Rate

Burst

370

Sustained
Service
Rate

Time

380

# FIG. 8

Start

**1** PSD.E= NxtGT.E — Yes — **2** Temp = ((PSD.V * FL)/512)

No

**3** PSD.E> NxtGT.E — Yes — **4** Temp = ((PSD.V * FL)/32)

No

**5** Temp = ((PSD.V * FL)/8192)

**6** Temp > 511 — Yes — **7** NxtGT.V = ((Temp + NxtGTT.V)/16)%512 NxtGT.E = NxtGT.E + 1

No

Slot distance is too great for current scaling factor, change the scaling factor

**8** Temp < 32 — Yes — **9** NxtGT.E=0

No

Slot distance is small enough to change to smaller scaling factor

No

**10** Yes NxtGT.V = ((Temp + NxtGT.V)*16)%512 NxtGT.E = NxtGT.E - 1

**11** NxtGT.V = (Temp + NxtGT.V)%512

no change in scaling factor

23

# FIG. 9

Start

**21**
Temp = ((PSD.V * FL)/512)

**22**
PSD.E = 0
No / Yes

**23**
BaseT=Current Time (8:0)

**24**
PSD.E = 1
No / Yes

**25**
BaseT=Current Time (12:4)

**26**
PSD.E = 2
No / Yes

**27**
BaseT=Current Time (16:8)

**28**
PSD.E = 3
Yes

**29**
BaseT=Curret Time (20:12)

Slot distance is too great for current scaling factor, change scaling factor

**30**
Temp >511
No / Yes

**31**
NxtGT.V = ((Temp + BaseT)/16)% 512
NxtGT.E = PSD.E +1

Slot distance is small enough to change to smaller scaling factor

**32**
Temp < 32
No / Yes

**33**
PSD.E = 0
No / Yes

modulus arithmatic keeps the value of NxtGT.V in the range of valid slot numbers

**34**
NxtGT.V = ((Temp + BaseT)*16)%512)
NxtGT.E = PSD.E - 1

**35**
NxtGT.V = (Temp + BaseT)%512
NxtGT.E = PSD.E

no change in scaling factor

# FIG. 10

```
              Start
                │
                ▼
          ◇ 301
       NxtRT.E = 0 ◇─── Yes
       │No              │
       │                ▼
       │      ┌─────────────────────────┐ 302
       │      │ TimeA=Current Time (8:0)│
       │      └─────────────────────────┘
       │                │
       ▼                ▼
          ◇ 317
       NxtRT.E = 1 ◇─── Yes
       │No              │
       │                ▼
       │      ┌──────────────────────────┐ 303
       │      │ TimeA=Current Time (12:4)│
       │      └──────────────────────────┘
       │                │
       ▼                ▼
          ◇ 304
       NxtRT.E = 2 ◇─── Yes
       │No              │
       │                ▼
       │      ┌──────────────────────────┐ 305
       │      │ TimeA=Current Time (16:8)│
       │      └──────────────────────────┘
       │                │
       ▼                ▼
          ◇ 306
       NxtRT.E = 3 ◇─── Yes
                        │
                        ▼
              ┌───────────────────────────┐ 307
              │ TimeA=Current Time (20:12)│
              └───────────────────────────┘
```

308 ◇ TimeA LATER NxtRT.V ─── Yes

309 ◇ TimeA > NxtRT.V

311 No → TimeT = (TimeA+512)-NxtRT.V

310 Yes → TimeT = (TimeA-NxtRT.V)

312 ◇ MBSCredit.E =NxtRT.E ─── Yes

313 MBSCredit.V = Min((MBSCredit.V +TimeT), MBS.V)

314 ◇ MBSCredit.E >NxtRT.E ─── Yes

315 MBSCredit.V = Min((MBSCredit.V +TimeT/16), MBS.V)

316 MBSCredit.V = Min((MBSCredit.V +TimeT*16), MBS.V)

# FIG. 11

```
                        ┌─────────┐
                        │  Start  │
                        └────┬────┘
                             │
                             ▼  ╱401
                           ╱─────╲
                          ╱ SSD.E = ╲
          No      ◄──────╱   MBS.E   ╲──────► Yes
          │               ╲         ╱
          │                ╲───────╱
          │                    │
          │                    ▼  ╱402
          │           ┌──────────────────┐
          │           │     Temp =       │
          │           │ ((SSD.V * FL)/512)│
          │           └────────┬─────────┘
          │                    │
          │                    ▼  ╱403
          │                  ╱─────╲
          │                 ╱ SSD.E > ╲
   No ◄───┤          ◄─────╱   MBS.E   ╲──────► Yes
   │      │                ╲         ╱
   │      │                 ╲───────╱
   │      │                     │
   │      │                     ▼  ╱404
   │      │            ┌──────────────────┐
   │      │            │     Temp =       │
   │      │            │ ((SSD.V * FL)/32) │
   │      │            └────────┬─────────┘
   │      │                     │
   │      │                     ▼  ╱405
   │      │            ┌──────────────────┐
   │      │            │     Temp =       │
   │      │            │((SSD.V * FL)/8192)│
   │      │            └────────┬─────────┘
   │      │                     │
   │      │                     ▼  ╱406
   │      │            ┌──────────────────┐
   │      │            │  MBSCredit.V =   │
   │      │            │ MBSCredit.V - Temp│
   │      │            └──────────────────┘
```

# FIG. 12

Start

**501**
Aging Service Tick?
No / Yes

**502**
Get next QCB from QCB Aging List

**503**
QinUse=1
No / Yes

**504**
SSD.V-0
No / Yes

**505**
QinRed=1
No / Yes
The QCB is active

**506**
TestAge
(NextRedTime.V,
NextRedTime.E,
NxtQinUse)

**507**
PSD.V=0
No / Yes
No Peak

**508**
QinBlue=1
No / Yes
The QCB is active

**509**
QinGreen=1
No / Yes

**510**
TestAge
(NextGreenTime.V,
NextGreenTime.E,
NxtQinUse)

**511**
NxtQinUse=0
No / Yes
The QCB is to be aged out

**513**
Update QCB
(QinUse=0)

**512**
Remove QCB from Aging List

# FIG. 13

Test Age

TestAge(
V, E,
NxtinUse)

**600**
E=0 —Yes→ **604** CC=
current time(10:9)

No

**601**
E=1 —Yes→ **605** CC=
current time(14:13)

No

**602**
E=2 —Yes→ **606** CC=
current time(18:17)

No

**603**
CC=
current time(22:21)

**607**
CC = V(10:9)

No

**608**
CC =
(V(10:9)+1)%4

No                                    Yes

**609**                    **610**
NxtinUse=0                 NxtinUse=1

Return
(NxtinUse)

# FIG. 14

EP 1 273 140 B1

Scheduler_Tick

Current Time

TP threshold
exceeded

WFQ Calendar

511

FlowID
LIFO

0

Current Pointer

Flow queue WFQ Candidate

# FIG. 15

```
        ┌──────────────┐
        │   EXAMINE    │
        │   TARGET     │
        │  PORT QUEUE  │
        └──────────────┘
                │
                ▼
          ╱────────────╲
    Y    ╱   TRHESHOLD   ╲    N
  ◄─────│   EXCEEDED?     │─────
         ╲                ╱
          ╲────────────╱
```

NO
ACTION

EXAMINE
SLOT
FOR
CURRENT
POINTER

ADVANCE
CURRENT
POINTER
TO NEXT
NON-EMPTY
SLOT

EMPTY?

Y

N

STORED
ADDRESS
IS
WFQ
CANDIDATE

EXIT

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0997402 A